**Europäisches Patentamt**

**European Patent Office**

**Office européen des brevets**

(19)

(11) Veröffentlichungsnummer: **0 307 559 B1**

## (12) EUROPÄISCHE PATENTSCHRIFT

(45) Veröffentlichungstag der Patentschrift: **02.01.92**

(51) Int. Cl.⁵: **A23C 9/20**

(21) Anmeldenummer: **88110284.2**

(22) Anmeldetag: **28.06.88**

(54) Verfahren zur Herstellung bifidogener Säuglings-und Diätnahrungen mit verminderter Antigenität.

(30) Priorität: **14.09.87 DD 306942**

(43) Veröffentlichungstag der Anmeldung:
**22.03.89 Patentblatt 89/12**

(45) Bekanntmachung des Hinweises auf die
Patenterteilung:
**02.01.92 Patentblatt 92/01**

(84) Benannte Vertragsstaaten:
**AT BE CH DE ES FR GB GR IT LI LU NL SE**

(56) Entgegenhaltungen:
**DE-A- 2 818 645**
**GB-A- 2 090 115**

(73) Patentinhaber: **MILUPA AKTIENGESELL-SCHAFT**
**Bahnstrasse 14-30**
**W-6382 Friedrichsdorf/Taunus(DE)**

(72) Erfinder: **Heine, Willi, Prof. Dr.**
**Wilhelm-Pieck-Universität Am Universitäts-platz 1**
**Rostock(DE)**
Erfinder: **Wutzke, Klaus-Dieter, Dr.**
**Wilhelm-Pieck-Universität Am Universitäts-platz 1**
**Rostock(DE)**

(74) Vertreter: **Brauns, Hans-Adolf, Dr. rer. nat. et al**
**Hoffmann, Eitle & Partner, Patentanwälte**
**Arabellastrasse 4**
**W-8000 München 81(DE)**

EP 0 307 559 B1

**Beschreibung**

Die Erfindung betrifft ein Verfahren zur Herstellung von bifidogenen und in der Antigenität herabgesetzten Säuglings- und Diätnahrungen.

Muttermilch gilt weltweit als die optimale Ernährung für Säuglinge. Aus mancherlei Gründen steht jedoch für die Ernährung von Neugeborenen und von Säuglingen diese Muttermilch nicht immer zur Verfügung. Deshalb wird schon seit langer Zeit die Milch von Säugetieren, insbesondere Kuhmilch, in der Säuglingsernährung verwendet. Unveränderte oder leicht fettreduzierte Kuhmilch, also eine Magermilch, wird vom Säugling jedoch erst nach dem 4. bis 6. Monat vertragen. Die Verwendung von Kuhmilch als Muttermilchersatz macht jedoch eine sogenannte Adaptation erforderlich. Hierzu gehört u.a. ein teilweiser Ersatz des Milchfetts durch pflanzliche Öle, und zur Verbesserung der Proteinwertigkeit und um den höheren Gehalt der Frauenmilch an gewissen essentiellen Aminosäuren zu erhalten, ist auch eine Veränderung des Gehaltes an Kuhmilchprotein erforderlich. Grundsätzlich ist man bestrebt, bei der Herstellung von Säuglingsnahrung auf Kuhmilchbasis diese der Muttermilch so eng wie möglich anzupassen.

In zahlreichen Literaturstellen wird die Herstellung von Säuglingsnahrung auf Basis von Kuhmilch beschrieben. Der Stand der Technik sieht dabei jeweils vor, Kuhmilch durch Fortnahme von bestimmten Bestandteilen und Zugabe von Muttermilch-ähnlichen Bestandteilen zu substituieren, um damit ein Produkt zu erhalten, das der Muttermilch weitgehend entspricht.

Neben dem Anwendungsbereich in der Säuglingsnahrung ist die Herstellung von Diätnahrungen mit verbesserter Eiweißverdaulichkeit und herabgesetzter Antigenität für die Krankenernährung von besonderer Bedeutung. Dies bezieht sich besonders auf Patienten mit intestinalen Allergien, anderen allergischen Erkrankungen (z.B. Ekzem, Urtikaria u.a.), auf Patienten mit Nieren- und Leberinsuffizienz und Patienten mit gastrointestinalen Störungen.

Sämtliche im Handel befindlichen Säuglings- und Diätnahrungen auf Eiweißbasis sind durch die meist vollständig erhaltene spezifische Antigenität ihrer Proteinkomponente charakterisiert. Der säurehydrolysierte Abbau von Nahrungseiweißen führt zwar zum weitgehenden Verlust der Antigenität, die auf dieser Basis hergestellten Oligopeptid- oder Elementardiäten zeichnen sich jedoch durch eine drastische Verschlechterung der Geschmackseigenschaften aus, die fast generell zur Ablehnung solcher Nahrungen durch die Patienten führt. Die Antigenität der Nahrungsproteine stellt somit ein bisher ungelöstes Problem bei der Adaptation von Säuglingsnahrungen auf Kuhmilch- oder Sojabasis an die Muttermilch und bei der Herstellung gut verträglicher Diätnahrungen in der Krankenernährung dar.

Alle bekannten Säuglingsnahrungen auf Basis von Kuhmilch weisen den Nachteil auf, daß dieser Muttermilchersatz nicht bifidogen ist. Bifidus-Faktoren sind u.a. Oligosaccharide, die unter anderem N-Acetyl-D-Glukosamin, N-Acetylgalactosamin, L-Fukose, Laktose, D-Glukose und D-Galaktose enthalten. Diese sind Wuchsstoffe für den in der Darmflora brustgefütterter Säuglinge hauptsächlich vorkommenden Laktobazillus bifidus. Die nicht vorhandene Bifidogenität aller bekannten Muttermilchersatzstoffe auf Basis von Säugetiermilch, insbesondere Kuhmilch, hat man bisher in Kauf genommen, weil keine Möglichkeit bekannt war, diesen Bifidus-Faktor den Frauenmilch-Ersatzpräparaten zuzufügen oder in diesen auszubilden. Der vorliegenden Erfindung liegt deshalb die Überlegung zugrunde, durch Abspaltung der Sialinsäure die bifidogenen Oligosaccharide am Residualprotein den Bifidusbakterien als Wuchsstoffe zugänglich zu machen.

Es ist bekannt, daß man die Antigenität von Nahrungsproteinen durch eine Wärmebehandlung herabsetzen kann. Proteinkomponenten mit einer hohen Antigenität zeichnen sich aber im allgemeinen durch eine hohe Resistenz gegen Erhitzen aus. So sind unter den Kuhmilch-Proteinen das ß-Laktoglobulin, Casein und $\alpha$-Laktalbumin auch nach einer Hitzebehandlung unverändert antigen wirksam, und lediglich die nur in geringen Konzentrationen vorkommenden bovinen Immunoglobuline und bovines Serumalbumin verlieren durch eine Hitzebehandlung vollständig oder teilweise ihre Antigenität. Ein Nachteil des langfristigen Erhitzens, insbesondere in Gegenwart von reduzierten Substanzen wie Laktose, ist auch die Bildung von Maillard-Produkten und damit die Verminderung der biologischen Wertigkeit der Proteine.

In-vitro- und in-vivo-Untersuchungen haben überraschenderweise gezeigt, daß die spezifische Antigenität von Kuhmilch-Proteinen durch Pepsinverdauung innerhalb von 30 bis 60 Minuten weitgehend zerstört wird. Dieser Vorgang ist pH-abhängig und erfolgt optimal bei einem pH-Wert 2, verzögert beim pH-Wert 3, und oberhalb eines pH-Wertes 4 praktisch nicht mehr. Die Tripsinverdauung bei einem pH-Wert von 8 führt nicht zu einem Verlust einer spezifischen Antigenität. Durch den normalen Prozeß der Magenverdauung wird demnach verhindert, daß Antigen-wirksame Milchproteine in den Darm gelangen, an der Mukosa haften und durch die Mukosabarriere permeieren können. Erhöhte Magen-pH-Werte, wie sie bei jungen Säuglingen physiologischerweise vorkommen und bei einer allergischen Diathese häufig nachweisbar sind, führen demnach bei Ernährung mit Fremdproteinen zur erhöhten Antigenbelastung des Organismus und können in besonderen Fällen allergische Erkrankungen, wie Z.B. die Kuhmilch-Protein-Intoleranz, auslösen.

Der vorliegenden Erfindung liegt deshalb auch die Überlegung zugrunde, daß man die Magenverdauung, die zu einem Verlust der antigenen Spezifität von Fremdproteinen führt, bei der Zubereitung einer Säuglingsnahrung auf Basis von Milch oder Milchprodukten vorbereiten kann.

Die Erfindung betrifft ein Verfahren zur Herstellung bifidogener Säuglingsnahrungen, bei denen man Milch, Milchbestandteile oder Milchprodukte von Säugetieren in an sich bekannter Weise bezüglich der Zusammensetzung weitgehend an die Muttermilch anpaßt, und ist dadurch gekennzeichnet, daß man zur Erzielung der Bifidogenität Sialinsäure von den Milchproteinen und deren Abbauprodukten abspaltet.

Gleichzeitig können auch Diätnahrungen mit herabgesetzter Antigenität und bifidogener Wirkung hergestellt werden, wobei dieselben Überlegungen wie bei den o.g. Säuglingsnahrungen zugrundegelegt werden können.

Die vorliegende Erfindung betrifft nicht die an sich bekannte übliche Adaptation von Milch, Milchbestandteilen oder Milchprodukten von Säugetieren an Frauenmilch. Diese wird als bekannt vorausgesetzt. Vielmehr ist das Wesen der Erfindung darin zu sehen, daß man Sialinsäure von den Milchproteinen und deren Abbauprodukten abspaltet.

Sialinsäure ist auch als N-Acetylneuraminsäure bekannt. Diese wird gemäß der vorliegenden Erfindung von ihrer Bindung am Residual-Protein abgespalten.

Unter Milch von Säugetieren wird im nachfolgenden insbesondere Kuhmilch verstanden. Milch von anderen Säugetieren, Z.B. von Ziegen, Schafen oder vom Pferd, kommt gegebenenfalls auch in Frage.

"Milch" ist im Sinne der vorliegenden Erfindung Vollmilch und Magermilch; Milchbestandteile umfassen die aus der Milch gewonnenen oder gewinnbaren Nahrungsproteine, insbesondere Caseine, Caseinate, Molkenproteine (auch entmineralisiert), Milcheiweißfraktionen, Proteine aus Magermilch und/oder Vollmilch sowie Milchprodukte, z.B. Quark.

Erfindungsgemäß wird die Abspaltung der Sialinsäure durch Erhitzen der Milch oder der Milchprodukte mit Salzsäure oder einem Salzsäure-Phosphorsäure-Gemisch, gegebenenfalls unter zusätzlicher Verwendung von Zitronensäure, bei einem pH-Wert im Bereich von 1 bis 3 unter solchen Druck- und Temperaturbedingungen vorgenommen, bei denen die hydrolytische Abspaltung der Sialinsäure von dem Milchprotein eintritt. Die Temperaturen für die Säurehydrolyse liegen hierbei im allgemeinen im Bereich von 40 bis 90° C, und der Druck liegt im allgemeinen zwischen Normaldruck bis 5 bar. Die Zeit für die Säurehydrolyse beträgt im allgemeinen 1 bis 24 Stunden. Es versteht sich, daß man insbesondere die Temperaturbedingungen und die Zeit für die Hydrolyse so wählt, daß eine nachteilige Beeinflussung der Milchproteine, die zur Bildung von Maillard-Produkten führen kann, vermieden wird.

Bei einer höheren Temperatur verläuft die Hydrolyse in kürzerer Zeit als bei einer niedrigeren Temperatur. Ebenso kann man durch die Wahl des geeigneten Drucks, der zwischen Normaldruck und 5 bar betragen kann, sowohl die für die Hydrolyse benötigte Zeit, als auch die Temperatur regeln. Bei einem höheren Druck kann man eine geringere Temperatur wählen. Beim Arbeiten unter Druck müssen entsprechende druckfeste Apparaturen verwendet werden, wodurch sich die Kosten gegebenenfalls erhöhen können. Deshalb arbeitet man zweckmäßigerweise bei Normaldruck oder nur schwach erhöhten Drücken.

Bei der Durchführung der Abspaltung der Sialinsäure durch Salzsäure bzw. einem Gemisch aus Salzsäure, Phosphorsäure und gegebenenfalls Zitronensäure ist eine anschließende Neutralisation des Gemisches erforderlich. Diese Neutralisation erfolgt mit anorganischen basischen Verbindungen des Natriums, Kaliums oder Calciums, z.B. mittels KOH, NaOH, $Na_2CO_3$, $K_2CO_3$ und/oder $Ca(OH)_2$. Die Wahl des Neutralisationsmittels hängt auch davon ab, in welchem Maße die Mineralstoffkonzentration in dem Produkt eingestellt werden soll.

Durch diese Basen wird das bei der Säurehydrolyse gebildete Residualprotein auf die gewünschte Kationenkonzentration der Fertignahrung eingestellt.

Nach der Sialinsäureabspaltung kann zweckmäßigerweise ein kurzzeitiges Erhitzen des Produktes auf 80 bis 100° C erfolgen, um die spezifische Antigenität des Milchproteins weiter herabzusetzen. Diese Erhitzungsstufe kann aber eine der bei der Zubereitung von Säuglings- und Diätnahrungen auf Basis von Milch, Milchbestandteilen oder Milchprodukten (Adaptation) ohnehin übliche Verfahrensstufe, z.B. Sterilisierung oder Pasteurisierung, sein.

Nachfolgend wird eine geeignete Verfahrensweise für die Säurehydrolyse der Sialinsäure angegeben.

Das Verfahren unter Anwendung der Säurehydrolyse kann durchgeführt werden unter Anwendung der folgenden Stufen:

a) Zugabe von verdünnter Salzsäure, Phosphorsäure und ggf. Zitronensäure zu der Milch oder dem Milchprodukt, bis zu einem pH-Wert im Bereich von 1 bis 3,

b) Erhitzen des gemäß a) erhaltenen Gemisches auf 40 bis 90° C bei einem Druck zwischen Normaldruck bis 5 bar und Behandeln unter diesen Bedingungen unter Abspaltung der Sialinsäure von den Milchproteinen.

c) Neutralisieren des gemäß b) erhaltenen Produktes mit KOH, NaOH, $Na_2CO_3$,$K_2CO_3$ und Ca $(OH)_2$ unter Ausbildung der gewünschten Mineralstoffkonzentration,

d) gegebenenfalls kurzes Erhitzen auf 80 bis 100 °C,

e) Zugabe von bei der Adaptation von Milch üblichen Bestandteilen aus der Gruppe Fette, Kohlenhydrate, Mineralstoffe, Spurenelemente und Vitamine, und

f) übliche molkereitechnische Verarbeitung des gemäß e) erhaltenen Produktes und Sprühtrocknung der bifidogenen Säuglings- oder Diätnahrung,

wobei die Stufe d) entfallen kann, wenn vor der Sprühtrocknung Erhitzungsstufen von 85 bis 100 °C durchgeführt werden.

Bei der technischen Durchführung des Verfahrens ist es zweckmäßig und üblich, vor bzw. nach den einzelnen Verfahrensstufen eine Homogenisierung der Mischung in geeigneten Homogenisierungsmaschinen durchzuführen. Dies richtet sich nach den jeweiligen technischen Gegebenheiten. Grundsätzlich läßt sich das erfindungsgemäße Verfahren in die zur Herstellung von Säuglings- und Diätnahrungen auf Basis von Milch oder Milchprodukten bereits angewendeten betrieblichen Einrichtungen ohne große zusätzliche Investitionen integrieren.

Das erfindungsgemäße Verfahren ermöglicht die Herstellung von bifidogenen Säuglings- und Diätnahrungen. Zur Erzeugung einer bifidogenen Wirkung ist es erforderlich, Lactose und/oder andere geeignete Kohlenhydrate (z.B. Maltose) zuzusetzen. Neben der Erzeugung der bifidogenen Eigenschaft wird auch die antigene Wirkung herabgesetzt. Das Residualprotein wirkt als Lektininhibitor und fungiert deshalb als Bifidus-Wuchsstoff, weil die bifidogenen Oligosaccharide für Lactobacillus bifidus zugänglich gemacht werden.

Die gemäß Verfahren hergestellten Säuglingsnahrungen erzeugen eine Bifidusflora wie bei frauenmilchernährten Kindern. In ersten klinischen Prüfungen an Neugeborenen und Säuglingen konnte gezeigt werden, daß nach Verabreichen einer derartigen Nahrung im Stuhl eine typische Bifidusflora nachweisbar war. Durch die Entwicklung dieser Bifidusflora im Darm der Kinder wird in den ersten Lebensmonaten ein Infektionsschutz erreicht, wie bei gestillten Säuglingen. Die gemäß Verfahren hergestellten Säuglings-und Diätnahrungen haben eine bessere Verdaulichkeit und Verträglichkeit, was ebenfalls in klinischen Tests festgestellt werden konnte. Die Anwendung einer gemäß Verfahren entwickelten Nahrung bei einigen Fällen von Kuhmilcheiweißintoleranz zeigte eine gute Verträglichkeit und liefert damit einen Hinweis auf die herabgesetzte Antigenität derartiger Nahrungen.

Die nachfolgenden Beispiele beschreiben die Erfindung.

Beispiel 1

64,17 kg entmineralisiertes Molkenproteinkonzentrat mit 80 Gew.% Eiweiß (62,91 kg Trockensubstanz) werden in 1.459,0 kg Magermilch (131,3 kg Trockensubstanz) aufgelöst und auf 50 °C erwärmt. Dazu gibt man 444,0 kg einer 0,18 n-Salzsäure und inkubiert den Ansatz 6 bis 8 Stunden. Nach 6 Stunden wird im Hydrolysetank der Gehalt an freier Sialinsäure kontrolliert.

Anschließend wird der Ansatz mit 4,64 kg Kaliumhydroxid auf einen pH-Wert von 6,5 bis 6,9 eingestellt und die Mischung wird auf 60 °C erwärmt. 504,3 kg Laktose (489,62 kg Trockensubstanz) sowie 14,0 kg Mineralstoffe, 6,0 kg Emulgatoren und 285,5 kg einer Pflanzenfettmischung werden dann zugegeben.

Der Ansatz wird auf 65 bis 70 °C erwärmt und dann bei 200 bar und etwa 65 °C in einem Homogenisator homogenisiert. Die Mischung wird in einen Zwischentank eingegeben und von dort in einem 3-Stufen-Fallstromverdampfer auf etwa 45 bis 50% Trockensubstanz eingedampft. Die eingedampfte Masse wird wieder in einen Zwischentank gegeben und unter Rühren gibt man jetzt im erforderlichen Maße Spurenelemente sowie 3,1 kg einer Vitaminmischung hinzu. Anschließend erfolgt nochmals eine Homogenisierung bei 100 bar. Nach dieser Homogenisierung wird das Gemisch 30 Sekunden bei 85 °C pasteurisiert und anschließend einem Sprühturm zugeleitet. Das aus dem Sprühturm erhaltene Produkt wird dann in üblicher Weise konfektioniert und verpackt. Der Ansatz ergibt 1 Tonne Pulver.

Eine so hergestellte Säuglingsnahrung ist hervorragend zur Ernährung von Neugeborenen als vollwertiger Muttermilchersatz geeignet und kann auch solchen Säuglingen, die mit Kuhmilch oder mit herkömmlichen industriell gefertigten Säuglingsnahrungen auf Basis von Kuhmilch nicht ernährt werden können, verabreicht werden, ohne daß eine Unverträglichkeit eintritt.

Beispiel 2

In 300 l 0,18 n-Salzsäure werden 79,76 kg (62,91 kg Trockensubstanz) entmineralisiertes Molkenproteinkonzentrat mit 80 Gew.% EiweiB bei 50°C gelöst und 6 bis 8 Stunden inkubiert. Getrennt davon werden in 145 l 0,18 N HCl bei 80°C 46,25 kg (44,9 kg Trockensubstanz) Säurecasein gelöst und 1 bis 2 Stunden bei 80°C inkubiert. Nach 6 Stunden erfolgt eine Kontrolle des Sialinsäuregehaltes des Molkenproteins. Das Gefäß mit dem Caseinansatz wird auf 50°C gekühlt und dann werden das Molkenprotein und das Casein miteinander vermischt. Die Mischung wird mit 4,64 kg KOH auf einen pH-Wert von 6,5 bis 6,8 eingestellt.

Zu der erhaltenen Mischung gibt man 700 l Wasser und erwärmt das Ganze auf 60°C. Anschließend gibt man 6,0 kg eines Emulgators, 283 kg Pflanzenfettmischung, 0,5 kg Taurin, 560 kg Laktose und 13,95 kg eines Mineralstoffgemisches hinzu. Der Ansatz wird auf 65 bis 70°C erwärmt und dann bei 200 bar und 65°C homogenisiert. Nach Überführen der homogenisierten Mischung in einen Zwischentank erfolgt dort der Zusatz von Spurenelementen und im Anschluß daran erfolgt eine zweite Homogenisierung bei 100 bar. Das homogenisierte Gemisch wird bei 85°C pasteurisiert und in üblicher Weise sprühgetrocknet. Das erhaltene Pulver wird mit einem Vitamingemisch vitaminisiert und dann erfolgt in üblicher Weise die Instantisierung und Verpackung. Der Ansatz ergibt 1 Tonne Pulver.

Eine so hergestellte Säuglingsnahrung ist in gleicher Weise wie das Produkt des Beispiels 1 zur Ernährung von Neugeborenen, auch von Frühgeborenen, geeignet.

Beispiel 3

Herstellung einer adaptierten Säuglingsnahrung auf Molkenprotein/Casein-Basis (60 : 40) mit 1,2% Eiweiß (Ansatz für 50 Liter)

1.220 g Magerquark (Proteingehalt ca. 20%, entsprechend 240 g Casein), der durch Streptococcus lactis- und durch Streptococcus cremoris-Starterkulturen mit Zusatz von Renilase hergestellt wurde, werden mit 468 g Molkenprotein (Ultralac 80) unter Zusatz von ca. 4 Liter 0,18 N HCl auf einen pH-Wert von 1,5 bis 2,0 eingestellt und eine Stunde bei 80°C erhitzt. Nach Abkühlung wird mit einem Gemisch von 26,24 g Ca-$(OH)_2$, 8,88 g NaOH und 26,6 g KOH auf einen pH-Wert von 6,6 - 6,9 eingestellt. Nach Zusatz von 2,77 g Magnesiumkarbonat, 7,03 g $KH_2PO_4$ und 4,63 g $NaH_2PO_4$ werden dem Ansatz 725 g Butter, 1,170 g Baumwollsaatöl, 62,500 I.E. Retinolpalmitat, 12,500 I.E. Ergocalciferol, 25 mg $\alpha$-Tokopherolacetat, 1,250 Ascorbinsäure, 25 mg Thiaminhydrochlorid, 37,5 mg Riboflavin, 37,5 mg Pyridoxinhydrochlorid, 250 mg Nikotinamid, 125 mg D-Pantenol zugegeben und das Gemisch nach Zusatz von 3,454 g Laktose homogenisiert und anschließend im Sprühturm getrocknet.

Die trinkfertige Milch wird durch Auflösen von 140 g Pulver in 900 ml Wasser zubereitet.

Elektrolytmuster:

Na    148 mg/L
K     482 mg/L
Ca    340 mg/L
Mg     30 mg/L
P     140 mg/L

Beispiel 4

Herstellung einer adaptierten Säuglingsnahrung auf Molkenprotein/Casein-Basis (60 : 40) mit 1,2% Eiweiß (Ansatz für 50 Liter)

1.220 g Magerquark (Proteingehalt ca. 20%, entsprechend 240 g Casein, gemäß Ausführungsbeispiel 4) werden zusammen mit 468 g Ultralac 80, entsprechend 355 g Molkenprotein, mit 11,5 g Phosphorsäure und anschließend mit ca. 4 Liter 0,18 N HCl auf pH 1,5 - 2,0 eingestellt. Anschließend wird eine Stunde bei 80°C erhitzt. Die Neutralisation erfolgt durch rasche Zugabe eines Gemisches aus 21,25 g Ca(CH)2, 11,23 g NaOH und 30,88 g KOH, bis zur Einstellung des Neutralpunktes. Die gewünschte Endkonzentration der An- und Kationen wird durch anteilige Zugabe von Na-, K-, Ca- und Mg-Salzen eingestellt.

Nach Zugabe von 2,77 g Magnesiumkarbonat werden 725 g Butter, 1,170 g Baumwollsaatöl, 62,500 I.E. Retinolpalmitat, 12,500 I.E. Ergocalciferol, 25 mg $\alpha$-Tokopherolacetat, 1,250 mg Ascorbinsäure, 25 mg Thiaminhydrochlorid, 37,5 mg Riboflavin, 37,5 mg Pyridoxinhydroochlorid, 250 mg Nikotinamid und 125 mg D-Pantenol zugesetzt und das Gemisch nach Zugabe von 3,454 g Laktose homogenisiert und anschließend im Sprühturm getrocknet.

Zur Stabilisierung der Emulsion können wahlweise bis zu 750 g vorgekochte oder gelatinisierte Stärke zugegeben werden. Die trinkfertige Milch wird durch Auflösung von 140 g Pulver mit 900 ml Wasser zubereitet.

Beispiel 5

Herstellung einer Diätmilch für Niereninsuffiziente mit 1,0% Eiweiß und niedrigem Kalium- und Phosphatgehalt (Ansatz für 50 Liter)

1.100 g Magerquark (Proteingehalt ca. 20%, entsprechend 216 g Casein, gemäß Ausführungsbeispiel 4 werden mit 392 g Molkenprotein (ggf. anteilig mit Laktalbumin) mit ca. 4 Liter 0,18 N HCl bei pH 1,5 - 2,0 eine Stunde bei 80° C erhitzt.

Zur Neutralisierung werden 17,74 g Calciumlaktat und ein Gemisch aus 21,25 g Ca(OH)$_2$, 23,7 g KOH und 20,1 NaOH eingesetzt. Nach Zusatz von 5,1 g NaH$_2$PO$_4$ und 2,77 g Magnesiumkarbonat, 725 g Butter, 1,170 g Baumwollsaatöl, 62,500 I.E. Retinolpalmitat, 12,500 I.E. Ergokalciferol, 25 mg $\alpha$-Tokopherolacetat, 1,250 mg Ascorbinsäure, 25 mg Thiaminhydrochlorid, 250 mg Nikotinamid und 125 mg D-Panthenol wird das Gemisch mit einer Vorlage von 3,454 g Laktose in hochtourigen Rührwerken homogenisiert und anschließend im Sprühturm getrocknet.

Auflösungsverhältnis zur trinkfertigen Milch: 140 g Pulver und 900 ml Wasser.

Elektrolyte:

Na    277 mg/L
K    82 mg/L
Ca    340 mg/L
Mg    30 mg/L
P    140 mg/L

Beispiel 6

Herstellung einer Diätnahrung für Kranke mit gastrointestinalen Störungen

| Zusammensetzung: | |
|---|---:|
| Säurecasein | 33,80 kg |
| entmineralisiertes Molkenproteinkonzentrat (75% Eiweiß i.T.) | 55,90 kg |
| Butterfett | 107,10 kg |
| Maiskeimöl | 164,30 kg |
| Emulgatoren | 6,00 kg |
| Stärke | 71,50 kg |
| Laktose | 512,52 kg |
| Vitaminmix | 3,00 kg |
| Mineralstoffmix | 30,00 kg |
| Calciumcarbonat | 4,65 kg |
| Kaliumhydroxid | 3,38 kg |
| Natriumhydroxid | 2,87 kg |
| Natriumhydrogenphosphat | 0,73 kg |
| Magnesiumhydroxidcarbonat | 0,50 kg |
| Salzsäure (wasserfrei, entsprechend 10,135 kg 37% HCl) | 3,75 kg |
| | 1.000,00 kg |

In 571 Liter 0,18 n-Salzsäure werden nacheinander 55,9 kg entmineralisiertes Molkenproteinkonzentrat (75% Eiweiß) und 33,8 kg Säurecasein gelöst. Der Ansatz wird auf 80° C erwärmt und 1 bis 2 Stunden unter Beibehaltung der Temperatur intensiv gerührt. Der pH-Wert des Ansatzes ist auf 1,5 bis 2,0 einzustellen. Nach Beendigung der Hydrolyse wird der Ansatz auf 50° C gekühlt und mit Kaliumhydroxid, Natriumhydroxid, Natriumhydrogenphosphat, Magnesiumhydroxidcarbonat und Calciumcarbonat auf einen pH von 6,5 bis 6,8 eingestellt. Danach werden dem Ansatz 430 Liter Wasser zugesetzt und auf ca. 70° C erwärmt. Im Ansatz werden nacheinander 512,52 kg Laktose und 71,5 kg Stärke eingerührt und homogen verteilt.

In einem separaten Tank werden 107,1 kg Butterfett und 164,3 kg Maiskeimöl zusammen aufgeschmolzen, auf ca. 70°C erwärmt und darin 6 kg Emulgatoren aufgelöst.

Die Fett/Emulgatorenmischung wird dem Ansatz unter Rühren zugesetzt und mindestens 20 Minuten gerührt.

Der Ansatz wird anschließend bei 200 bar homogenisiert und in einem Zwischentank gestapelt. Danach erfolgt dort der Zusatz von Vitamin- und Mineralstoffmix. Nach 10 Minuten Rühren wird der Ansatz bei 85 bis 90°C pasteurisiert und anschließend in üblicher Weise sprühgetrocknet. Das erhaltene Pulver wird abgepackt oder nachinstantisiert.

Das Produkt eignet sich als Diätnahrung zur Ernährung von Patienten mit Störungen des Gastrointestinal-Trakts.

**A n a l y s e :**

**1 0 0   m l   e n t h a l t e n**

| | | |
|---|---|---|
| Eiweiß | | 1,0 g/100 ml |
| Kohlenhydrate | | 8,5 g |
| davon Laktose | 7,5 g | |
| Stärke | 1,0 g | |
| Fett | | 3,8 g |
| davon Butterfett | 1,5 g | |
| Pflanzenfett | 2,3 g | |
| Asche | | 0,2 g |
| davon Na | 28 mg/100 ml | |
| K | 48 mg | |
| Ca | 34 mg | |
| Mg | 3 mg | |
| P | 14 mg | |

**Patentansprüche**

**1.** Verfahren zur Herstellung von bifidogenen Säuglings-und Diätnahrungen, bei dem man Milch, Milchbestandteile oder Milchprodukte von Säugetieren in an sich bekannter Weise adaptiert (der Muttermilch anpaßt), dadurch **gekennzeichnet,** daß man zur Erzielung der Bifidogenität Sialinsäure von den Milchproteinen und deren Abbauprodukten abspaltet.

**2.** Verfahren nach Anspruch 1, dadurch **gekennzeichnet,** daß man die Abspaltung der Sialinsäure durch Erhitzen der Milch oder der Milchprodukte mit Salzsäure oder einem Salzsäure-Phosphorsäure-Gemisch, gegebenenfalls unter zusätzlicher Verwendung von Zitronensäure, bei einem pH-Wert im Bereich von 1 bis 3 unter Druck- und Temperaturbedingungen, bei denen die hydrolytische Abspaltung der Sialinsäure von dem Milchprotein eintritt, durchführt.

**3.** Verfahren gemäß Anspruch 2, dadurch **gekennzeichnet,** daß man die Säurehydrolyse bei einer Temperatur zwischen 40 und 90°C und einem Druck zwischen Normaldruck bis 5 bar durchführt.

**4.** Verfahren gemäß Anspruch 3, dadurch **gekennzeichnet,** daß man die Säurehydrolyse in einem Zeitraum zwischen 1 und 24 Stunden durchführt.

**5.** Verfahren gemäß Ansprüchen 1 bis 3, dadurch **gekennzeichnet,** daß man nach der Abspaltung von Sialinsäure mit Salzsäure oder einem Salzsäure-Phosphorsäure-Gemisch mit NaOH, KOH, Na$_2$CO$_3$, K$_2$CO$_3$ und/oder Ca(OH)$_2$ neutralisiert.

**6.** Verfahren gemäß Ansprüchen 1 bis 5, dadurch **gekennzeichnet,** daß man Laktose und/oder andere Kohlenhydrate, wie z.B. Maltose, zur Verstärkung der bifidogenen Wirkung zugibt.

**7.** Verfahren gemäß Anspruch 1, dadurch **gekennzeichnet,** daß man folgende Stufen durchführt:

a) Zugabe von verdünnter Salzsäure, Phosphorsäure und gegebenenfalls Zitronensäure zu der Milch oder dem Milchprodukt bis zu einem pH-Wert im Bereich von 1 bis 3,
b) Erhitzen des gemäß a) erhaltenen Gemisches auf 40 bis 90°C bei einem Druck zwischen Normaldruck bis 5 bar und Behandeln unter diesen Bedingungen unter Abspaltung der Sialinsäure von den Milchproteinen.
c) Neutralisieren des gemäß b) erhaltenen Produktes mit KOH, NaOH, Na$_2$CO3, K$_2$CO3 und Ca(OH)$_2$ unter Ausbildung der gewünschten Mineralstoffkonzentration,
d) gegebenenfalls kurzes Erhitzen auf 80 bis 100°C,
e) Zugabe von bei der Adaptation von Milch üblichen Bestandteilen aus der Gruppe Fette, Kohlenhydrate, Mineralstoffe, Spurenelemente und Vitamine, und
f) übliche molkereitechnische Verarbeitung des gemäß e) erhaltenen Produktes und Sprühtrocknung der bifidogenen Säuglings- oder Diätnahrung,

wobei die Stufe d) entfallen kann, wenn Erhitzungsschritte von 85 bis 100°C vor der Trocknung durchgeführt werden.

## Claims

**1.** Process for producing bifidogenic infant and diet foods, in which milk, milk constituents or milk products of mammals are adapted in a manner known per se (matches mother's milk), characterised in that sialic acid is split from the milk proteins and degradation products thereof to achieve bifidogenicity.

**2.** Process according to claim 1, characterised in that the splitting of sialic acid is carried out by heating the milk or the milk products with hydrochloric acid or a hydrochloric acid-phosphoric acid mixture, optionally with additional use of citric acid, at a pH value in the range from 1 to 3 under pressure and temperature conditions at which the hydrolytic splitting of sialic acid from the milk protein occurs.

**3.** Process according to claim 2, characterised in that the acid hydrolysis is carried out at a temperature between 40 and 90°C and a pressure between normal pressure and 5 bar.

**4.** Process according to claim 3, characterised in that the acid hydrolysis is carried out for a period between 1 and 24 hours.

**5.** Process according to claims 1 to 3, characterised in that after splitting sialic acid using hydrochloric acid or a hydrochloric acid-phosphoric acid mixture, neutralisation with NaOH, KOH, Na$_2$CO$_3$, K$_2$CO$_3$ and/or Ca(OH)$_2$ is carried out.

**6.** Process according to claims 1 to 5, characterised in that lactose and/or other carbohydrates, such as for example maltose, are added to increase the bifidogenic effect.

**7.** Process according to claim 1, characterised in that the following steps are carried out:

a) addition of dilute hydrochloric acid, phosphoric acid and optionally citric acid, to the milk or the milk product up to a pH value in the range from 1 to 3,
b) heating the mixture obtained from a) at 40 to 90°C at a pressure between normal pressure and 5 bar and treating under these conditions to produce splitting of sialic acid from the milk proteins,
c) neutralizing the product obtained from b) using KOH, NaOH, Na$_2$CO$_3$, K$_2$CO$_3$ and Ca(OH)$_2$ with formation of the required mineral concentration,
d) optionally short heating at 80 to 100°C,

e) addition of constituents conventional for the adaptation of milk from the group comprising fats, carbohydrates, minerals, trace elements and vitamins, and

f) conventional diary processing of the product obtained from e) and spray-drying of the bifidogenic infant or diet food,

wherein the step d) may be omitted if heating steps of 85 to 100 ° C are carried out before drying.

**Revendications**

1. Procédé pour la production d'aliments pour bébés et d'aliments diététiques bifidogènes dans lequel on adapte de manière connue (au lait maternel) le lait, tes constituants du tait ou des produits du tait de mammifères, caractérisé en ce que pour l'obtention de l'activité bifidogène, on sépare l'acide sialique des protéines du tait et de leurs produits de dégradation.

2. Procédé selon ta revendication 1, dans lequel on effectue la séparation de l'acide sialique par chauffage du lait ou des produits du tait avec l'acide chlorhydrique ou un mélange acide chlorhydrique-acide phosphorique, éventuellement avec une utilisation supplémentaire d'acide citrique, à un pH dans la gamme de 1 à 3 dans des conditions de pression et de température dans lesquelles a lieu la séparation hydrolytique de l'acide sialique de la protéine du lait.

3. Procédé selon la revendication 2, caractérisé en ce que l'on met en oeuvre l'hydrolyse acide à une température comprise entre 40 et 90 ° C et sous une pression entre la pression normale et 5 bar.

4. Procédé selon la revendication 3, caractérisé en ce que l'on met en oeuvre l'hydrolyse acide en une durée comprise entre 1 et 24 h.

5. Procédé selon les revendications 1 à 3, caractérisé en ce que, après la séparation de l'acide sialique par l'acide chlorhydrique ou un mélange acide chlorhydrique, acide phosphorique, on neutralise par NaOH, KOH, $Na_2CO_3$, $K_2CO_3$ et/ou $Ca(OH)_2$.

6. Procédé selon les revendications 1 à 5, caractérisé en ce que l'on ajoute du lactose et/ou d'autres hydrates de carbone, comme par exemple le maltose, pour renforcer l'activité bifidogène.

7. Procédé selon la revendication 1, caractérisé en ce que l'on met en oeuvre les étapes suivantes :
   a) addition d'acide chlorhydrique dilué, d'acide phosphorique et éventuellement d'acide citrique au lait ou produit du lait jusqu'à un pH dans la gamme de 1 à 3 ;
   b) chauffage du mélange obtenu selon a) à 40-90 ° C sous une pression entre la pression normale et 5 bar et traitement dans ces conditions avec séparation de l'acide sialique des protéines du lait ;
   c) neutralisation du produit obtenu sous b) par KOH, NaOH, $Na_2CO_3$, $K_2CO_3$ et $Ca(OH)_2$ avec formation de la concentration désirée en matières minérales ;
   d) éventuellement court chauffage à 80-100 ° C ;
   e) addition de constituants habituels dans l'adaptation du lait choisis parmi les graisses, les hydrates de carbone, les substances minérales, les oligo-éléments et les vitamines ; et
   f) traitement par les techniques habituelles de laiterie du produit obtenu selon e) et séchage par pulvérisation de l'aliment pour bébés ou aliment diététique bifidogène,
l'étape d) pouvant être supprimée si l'étape de chauffage de 85 à 100 ° C est mise en oeuvre avant le séchage.